# EUROPÄISCHE PATENTANMELDUNG

(11) **EP 2 444 186 A1**
(43) Veröffentlichungstag der Anmeldung: **25.04.2012**
(21) Anmeldenummer: 10013793.4
(22) Anmeldetag: 20.10.2010
(51) Int. Cl.: B23C 5/08, B23D 45/08, B23D 47/12, B23D 61/08

(54) **Wirbeltrennvorrichtung**

(71) Anmelder: Reika GmbH & Co. KG, 58093 Hagen (DE)
(72) Erfinder: Braun, Hans-Jörg, 58093 Hagen (DE)
(74) Vertreter: Dörner, Kötter & Kollegen

(57) **Zusammenfassung**

Die Erfindung betrifft eine Vorrichtung zur spanenden Bearbeitung von rohr- und stangenförmigen Werkstücken im Wirbelverfahren, umfassend ein ein Gehäuse aufweisendes Wirbelaggregat, an dem eine drehbar gelagerte, mit einem Antrieb verbundene Aufnahme für ein Wirbelwerkzeug mit Innenverzahnung angeordnet ist, wobei der Antrieb ein elektromagnetischer rotatorischer Direktantrieb (5) ist, umfassend einen an dem Gehäuse (10) befestigten ringförmigen Stator (51) mit im Wesentlichen C-förmigen Querschnitt und einen in Form einer ringförmigen und mit Permanentmagneten (522) versehenen Hohlwelle mit T-förmigen Querschnitt ausgebildeten Rotor (52), der mit der Aufnahme (12) verbunden ist und außen an dem C-förmigen Querschnitt des Stators (51) an dessen freien Schenkeln (513) beidseitig des umlaufenden Spaltes (514) gelagert ist, wobei der Stator (51) mit einer Wicklung (53) zur Erzeugung eines elektromagnetischen Feldes versehen ist, welche zwischen den freien Schenkeln (513) und der diesen gegenüberliegenden geschlossenen Rückwand (511) des C-förmigen Querschnitts des Stators (51) angeordnet ist.

## Beschreibung

Die Erfindung betrifft eine Vorrichtung zur spanenden Bearbeitung von rohr- und stangenförmigen Werkstücken im Wirbelverfahren nach dem Oberbegriff des Patentanspruchs 1.

Beim Wirbelverfahren handelt es sich um ein spanabhebendes Verfahren, bei dem das Werkzeug das Werkstück spiralwirbelartig umkreist. Die Einschnitttiefe wird durch ein oder mehrere, mit hoher Schnittgeschwindigkeit umlaufende Messer in einem Arbeitsgang hergestellt. Dabei wälzt sich die durch das Schneidwerkzeug gebildete Innenmantelfläche auf der zylindrischen Außenmantelfläche des zu bearbeitenden Werkstücks ab. Dieser Bewegungsvorgang wird der sich ständig kreisenden Bewegung des Schneidwerkzeugs überlagert.

Das Wirbelverfahren, beispielsweise bekannt aus der EPO 490 328 B1 hat den Vorteil, dass eine Vielzahl von Schneidwerkzeugen, insbesondere Schneidstählen, nebeneinander angeordnet werden können, die bei einem größeren Segmentbereich gleichzeitig in Eingriff mit dem Werkstück stehen. Beim Wirbeltrennen wird dabei ein Wirbelsägewerkzeug mit innenliegender Verzahnung - nachfolgend unter dem Begriff "Sägeblatt" subsumiert - eingesetzt. Die Schneidzähne des Sägeblatts können tangential in das Werkstück eindringen. Aufgrund des Wirbelverfahrens braucht der wirksame Eindringradius des Sägeblatts nur die Wandstärke des Werkstücks zu umfassen. Handelt es sich hierbei um ein Vollmaterial, so muss das Sägeblatt nur bis zum Mittelpunkt des Vollmaterials eindringen, da die weitere Hälfte des Werkstücks durch die Umkreisung des Sägeblatts abgetrennt wird. Derartige Wirbeltrennvorrichtungen werden nachfolgend als "Zirkularsäge" bezeichnet.

Der Einsatz des Wirbelverfahrens zur spanenden Bearbeitung von rohr- und stangenförmigen Werkstücken hat sich bewährt, insbesondere können hierbei die Bearbeitungszeiten deutlich reduziert werden. Kernstück der Wirbelvorrichtung ist das Wirbelaggregat, welches eine Aufnahme für ein Wirbelwerkzeug aufweist. Diese Aufnahme ist drehbar gelagert und mittels eines Antriebsmotors angetrieben. In Bezug auf die Kopplung des Antriebsmotors mit der Aufnahme kommen insbesondere zwei Ausführungen zum Einsatz. Zum einen ist es bekannt, den Antriebsmotor parallel zur Drehachse der Aufnahme anzuordnen und diesen über einen Riemenantrieb mit der Aufnahme zu koppeln. Hierzu ist der Elektromotor relativ groß zu dimensio-nieren, um die für den Wirbelvorgang benötigten hohen Drehmomente und hohen Drehzahlen zur Verfügung stellen zu können. Dabei ist der Antriebsmotor häufig seitlich am Gehäuse des Wirbelaggregats angeordnet, so dass das Wirbelaggregat einen erheblichen Bauraum beansprucht. Dieses ist insbesondere in Bezug auf den Schwenkwinkel des häufig schräggelagerten Wirbelaggregats nachteilig, da durch den seitlich angeordneten Motor der Winkel begrenzt ist. Weiterhin unterliegt der Riemenantrieb einem mechanischen Verschleiß, was mit einem Leistungsverlust hinsichtlich des tatsächlich übertragenen Drehmoments einhergeht. Zudem ist bei dem bekannten Riemenantrieb nur eine unzulängliche Laufruhe erzielbar.

Weiterhin ist es bekannt, den Antriebsmotor mit seiner Antriebswelle senkrecht zur Drehachse der Aufnahme stehend anzuordnen und über ein Übersetzungs- oder Kegelradgetriebe mit der Aufnahme zu koppeln. Auch hier ist der Antriebsmotor groß zu dimensionieren, um die erforderlichen Drehmomente und Drehzahlungen zur Verfügung stellen zu können. Auch diese Lösung beansprucht einen erheblichen Bauraum und stellt sich im Übrigen als sehr aufwendig im Hinblick auf das einzusetzende Übersetzungs- oder Kegelradgetriebe dar.

Hier will die Erfindung Abhilfe schaffen. Der Erfindung liegt die Aufgabe zugrunde, eine Vorrichtung zur spanenden Bearbeitung von rohr- und stangenförmigen Werkstücken im Wirbelverfahren zu schaffen, bei dem die Baugröße des Wirbelaggregats minimiert ist, bei dem Leistungsverluste hinsichtlich des tatsächlich übertragenen Drehmoments vermieden sind und bei dem eine hohe Laufruhe erzielbar ist. Gemäß der Erfindung wird diese Aufgabe durch die Merkmale des kennzeichnenden Teils des Patentanspruchs 1 gelöst.

Mit der Erfindung ist eine Vorrichtung zur spanenden Bearbeitung von rohr- und stangenförmigen Werkstücken im Wirbelverfahren geschaffen, bei der der Bauraum des Wirbelaggregats minimiert ist und bei der ein Leistungsverlust hinsichtlich des tatsächlich übertragenen Drehmoments vermieden ist. Durch den Einsatz eines elektromagnetischen rotatorischen Direktantriebs ist eine Integration des Antriebs direkt in das Wirbelaggregat erzielt. Dieser Direktantrieb wirkt unmittelbar mit der Aufnahme zusammen; Übertragungsmedien wie Zahnriemen sind nicht erforderlich. Durch die Ausformung des Stators als an dem Gehäuse fest angebrachter Ring mit C-förmigen Querschnitt und die Gestaltung des Rotors als Hohlwelle mit T-förmigen Querschnitt, der außen an dem C-förmigen Querschnitt des Stators an dessen freien Schenkeln beidseitig des umlaufenden Spaltes gelagert ist, ist ein sehr kompakter Aufbau mit einer sehr geringen Anzahl von Bauteilen ermöglicht. Die Wicklungen des Stators sind innerhalb des C-förmigen Querschnitts des Stators zwischen den freien Schenkeln und der diesen gegenüberliegenden Rückwand über einen großen Durchmesser angeordnet. Dieser große Durchmesser ermöglicht einer relativ große Anzahl von Polen bei gleichzeitiger Beibehaltung der thermischen Belastbarkeit des Antriebs. Da keine mechanischen Übertragungsglieder vorhanden sind, ist zudem eine hohe mechanische Überlastsicherung gegeben, worin eine hohe Betriebssicherheit begründet ist. Dadurch, dass die Lager außerhalb der Wicklungen des Stators angeordnet sind, besteht nur eine geringe Wärmeübertragung auf die Lager.

In Weiterbildung der Erfindung ist an dem Stator wenigstens ein Kanal zur Durchleitung von Kühlmittel angeordnet. Hierdurch ist eine bessere Kühlung der Wicklung erzielt, wodurch die thermische Belastbarkeit des Antriebs auch bei hochpoliger Anordnung erzielbar ist.

In Ausgestaltung der Erfindung ist an der der Werkzeugaufnahme zugewandten Seitenwand des C-förmigen Querschnitts des Stators wenigstens eine Nut eingebracht, in die ein an der Aufnahme angeformter Führungssteg eingreift. Hierdurch ist eine gute Führung der Aufnahme bewirkt.

In weiterer Ausgestaltung der Erfindung greift der radial nach außen ragende umlaufende Steg des C-förmigen Querschnitts des Rotors in den umlaufenden Spalt des C-förmigen Querschnitts des Stators ein. Hierdurch ist eine geringe Bautiefe erzielt. Vorzugsweise greift der umlaufende Steg des Rotors derart in den Spalt des Stators ein, dass dessen Kopffläche mit den Innenflächen der freien Schenkel des C-förmigen Querschnitts des Stators fluchtet.

In Weiterbildung der Erfindung ist der Rotor an seiner der Werkzeugaufnahme gegenüberliegenden Seite mit einem Flansch verbunden, der drehbar mit dem Stator verbunden ist. Hierdurch ist eine gute Zugänglichkeit des Rotors bewirkt.

In weiterer Ausgestaltung der Erfindung ist zwischen Stator, Rotor und Werkzeugaufnahme bzw. Flansch beidseitig des Steges des T-förmigen Querschnitts des Rotors jeweils ein Lagersitz gebildet, der das Lager vollständig umschließt. Hierdurch ist ein Eindringen von Metallspänen in die Lager wirksam verhindert. Zudem können die Lager mit einer Dauerschmierung versehen werden, wodurch eine wartungsfreie Lagerung erzielbar ist.

In Weiterbildung der Erfindung umfasst die Aufnahme des Wirbelaggregats Indexierstifte, die mit in dem Wirbelwerkzeug vorhandenen Indexierbohrungen korrespondieren. Hierdurch ist eine lagegerechte Aufnahme des Wirbelwerkzeugs in der Aufnahme ermöglicht.

In Ausgestaltung der Erfindung weist das Gehäuse des Wirbelaggregats eine in Art eines Tonnenausschnitts ausgebildete Außenwandung auf. Hierdurch ist eine schwenkbare Lagerung des Wirbelaggregats innerhalb der Bearbeitungsvorrichtung ermöglicht.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

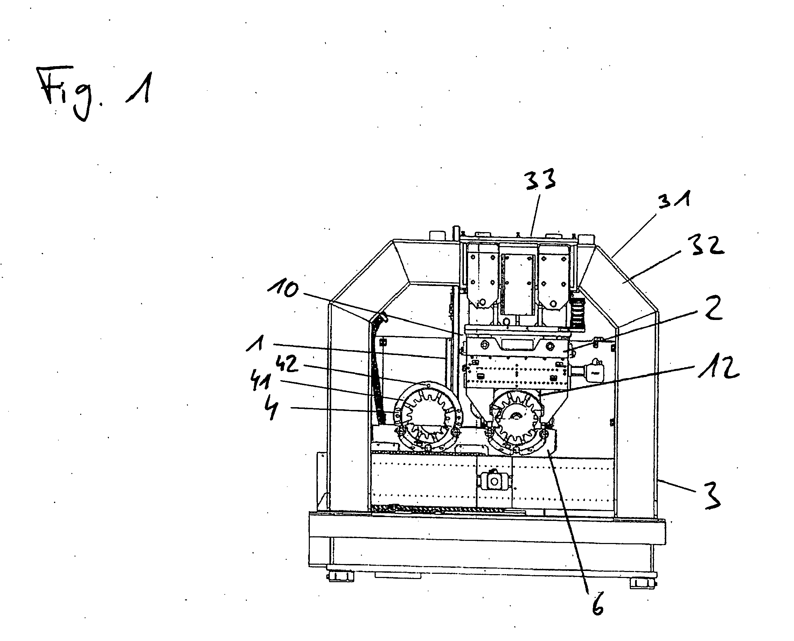

- Fig. 1: die schematische Darstellung einer Zirkularsäge in der Ansicht von hinten;

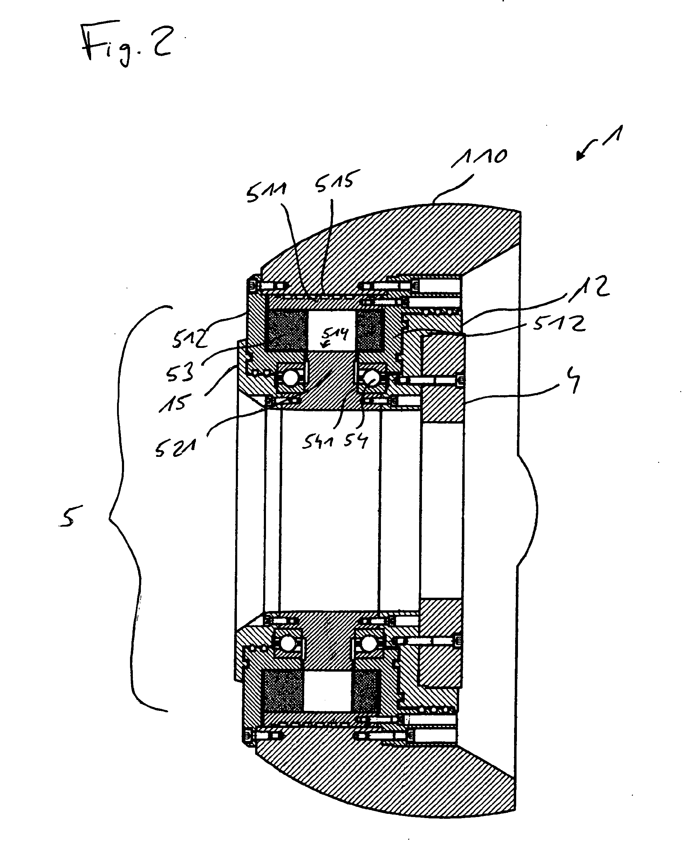

- Fig. 2: die schematische Darstellung des Wirbelaggregats mit elektromagnetischen rotatorischen Direktantrieb der Zirkularsäge aus Figur 1 und
- Fig. 3: die schematische Darstellung des in einer Aufnahme der Zirkularsäge nach Figur 1 schwenkbar angeordneten Wirbelaggregats gemäß Figur 2.

Die als Ausführungsbeispiel gewählte Wirbelvorrichtung ist eine Wirbeltrennvorrichtung, nachfolgend als Zirkularsäge bezeichnet. Sie umfasst ein in einem Gehäuse 11 angeordnetes Wirbelaggregat 1 mit einer Werkstückzuführung sowie einen Abgreifer 2, welche in einem Rahmensystem 3 angeordnet sind. Das Rahmensystem 3 ist dabei im Wesentlichen aus zwei parallel zueinander angeordneten Portalen 31, 32 gebildet, die kopfseitig über einen Verbindungsträger 33 miteinander verbunden sind. Dabei ist das Wirbelaggregat 1 an dem Aggregatportal 31 befestigt; das Stützportal 32 dient dem Auflager des Verbindungsträgers 33. An dem Verbindungsträger 33 ist eine Schiene befestigt, an der der Abgreifer 2 verschiebbar angeordnet ist. Im Ausführungsbeispiel weist die Zirkularsäge ein integriertes Werkzeugwechselsystem 6 auf.

Das Wirbelaggregat 1 umfasst eine Werkzeugaufnahme 12 zur Aufnahme eines Sägeblatts 4. Die Werkzeugaufnahme 12 ist im Wesentlichen trichterförmig ausgebildet, wodurch die Spanabfuhr verbessert ist. Umlaufend ihrer kreisförmigen Öffnung ist in der Werkzeugaufnahme 12 ein Anlageflansch zur passgenauen Anlage eines Sägeblatts 4 angeordnet. Zur definierten Lage des Sägeblatts 4 in der Werkzeugaufnahme 12 ist der Anlageflansch mit einem - nicht dargestellten - Indexierstift versehen, welcher in eine in dem Schneidenträgerring 41 eingebrachte Indexierbohrung 42 einführbar ist.

Die Werkzeugaufnahme 12 ist mit einem elektromagnetischen rotatorischen Direktantrieb 5 verbunden. Der Direktantrieb 5 ist im wesentlichen gebildet durch einen an dem Gehäuse 11 des Wirbelaggregats 1 befestigten ringförmigen Stator 51, der einen im wesentlichen C-förmigen Querschnitt aufweist, und einen Rotor 52, der in Form einer Hohlwelle mit T-förmigem Querschnitt gebildet ist, dessen nach außen ragender umlaufender Steg 521 mit permanenten Magneten 522 versehen ist. Die Werkzeugaufnahme 12 ist im Ausführungsbeispiel mit dem Rotor 52 verschraubt. Die Werkzeugaufnahme 12 ist über den Rotor 52 über Lager 54 mit dem Stator 51 drehbar verbunden. Dabei ist zwischen den freien Schenkeln 513 des C-Profils des Stators 51, der Hohlwelle des Rotors 52 sowie der Werkzeugaufnahme 12 ein geschlossener Lagersitz gebildet, wodurch ein Eindringen von Metallspänen in das Lager 54 verhindert ist. An seiner der Werkzeugaufnahme 12 gegenüberliegenden Seite ist der Rotor 52 mit einem Flansch 15 verschraubt, welcher drehbar mit dem Stator 51 verbunden ist. Der Flansch 15 ist wiederum derart angeordnet, dass in gleicher Weise ein geschlossener Lagersitz 514 für das an dem Flansch 15 anliegende Lager 54 gebildet ist. Werkzeugaufnahme 12 und Flansch 15 sind über Verzahnungen mittels Nuten 510 und Führungsstegen 14 mit dem Stator 51 verbunden.

Innerhalb des C-förmigen Querschnitts des Stators 51 zwischen dessen freien Schenkeln 513 und dessen den freien Schenkeln 513 gegenüberliegenden Seitenwand 512 sind Wicklungen 53 angeordnet. Die Wicklungen 53 sind in den Figuren nur schematisch dargestellt. Sie sind derart ausgebildet, dass zwischen den Wicklungen 53 und dem mit Permanentmagneten 522 versehenen Steg 521 des Rotors 52 nur ein schmaler Luftspalt gebildet ist. Dabei greif der Steg 521 des Rotors 52 derart in den zwischen den freien Schenkeln 513 des C-förmigen Querschnitts des Stators 51 gebildeten Spalt 514 ein, dass die Kopffläche des Steges 521 im Wesentlichen mit den Innenflächen der freien Schenkel 513 des C-förmigen Querschnitts des Stators 51 fluchtet. Zur besseren Wärmeabfuhr sind weiterhin an dem Stator 51 Kühlkanäle 515 vorgesehen.

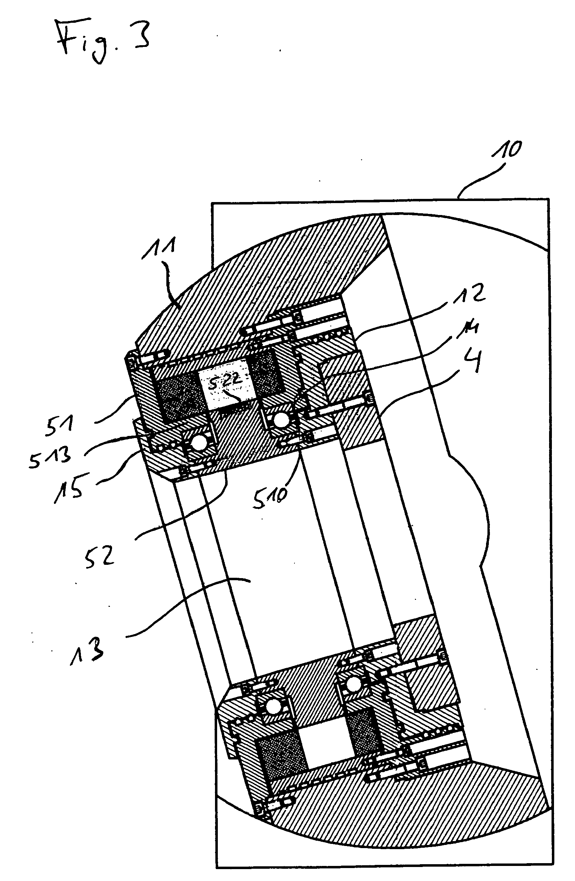

Das Gehäuse 11 des Wirbelaggregats 1 ist im Ausführungsbeispiel einer Außenwandung in Art eines Tonnenausschnitts versehen und in einer Aufnahme 10 der Zirkularsäge schwenkbar angeordnet. Dabei weist die Aufnahme 10 eine tonnenförmige Innenkontur auf, welche mit der Außenkontur des Gehäuses 11 des Wirbelaggregats korrespondiert, so dass in jeder Schwenklage eine gute radiale Abstützung des Wirbelaggregats gewährleistet ist (vgl. Figur 3).

Der eingesetzte elektromagnetische rotatorische Direktantrieb 5 ist vorliegend nur mit seinen wesentlichen Bauteilen angegeben. Einzelheiten der Gestaltung derartiger Direktantriebe sind dem Fachmann hinlänglich bekannt. Der besondere Vorteil der erfindungsgemäßen Anordnung des Direktantriebs ergibt sich vor allem aus der einfacheren mechanischen Struktur. Durch den Entfall der zur Leistungsumformung benutzten mechanischen Übertragungselemente ist dieser Direktantrieb spielfrei. Systemgrößen wie Strom, Kraft bzw. Drehmoment und Geschwindigkeit bzw. Drehzahl können direkt erfasst und einem Regelungskonzept einbezogen werden. Dies wirkt sich neben der verbesserten Positioniergenauigkeit auch vereinfachend auf die Regelung dieses Antriebs aus. Ein weiterer Vorteil, der sich durch den Entfall von mechanischen Übertragungselementen ergibt, ist die hiermit verbundene Wartungsfreiheit. Diese wird unter anderem auch durch die besondere geschlossene Einbaulage der Lager 54, welche zudem von der Werkzeigaufnahme entfernt angeordnet sind, erzielt, wodurch ein Eindingen von Spänen in die Lager 54 verhindert ist. Zusätzliche Maßnahmen wir beispielsweise das Vorsehen von Sperrluft zum Schutz der Lager erübrigen sich so.

Die zuvor beschriebene Zirkularsäge ist lediglich ein Beispiel einer Vorrichtung zur spanenden Bearbeitung; selbstverständlich ist die vorliegende Erfindung nicht auf Wirbeltrennvorrichtungen beschränkt. Vielmehr erstreckt sich die Erfindung auf sämtliche Vorrichtungen, mit denen mittels Wirbelverfahren eine spanende Bearbeitung von rohr- und stangenförmigen Werkstücken erzielbar ist. Hierzu zählen beispielsweise auch Vorrichtungen zum Gewindewirbeln.

## Patentansprüche

1. Vorrichtung zur spanenden Bearbeitung von rohr- und stangenförmigen Werkstücken im Wirbelverfahren, umfassend ein ein Gehäuse aufweisendes Wirbelaggregat, an dem eine drehbar gelagerte, mit einem Antrieb verbundene Aufnahme für ein innenverzahntes Wirbelwerkzeug angeordnet ist, **dadurch gekennzeichnet, dass** der Antrieb ein elektromagnetischer rotatorischer Direktantrieb (5) ist, umfassend einen an dem Gehäuse (10) befestigten ringförmigen Stator (51) mit im Wesentlichen C-förmigen Querschnitt und einen in Form einer ringförmigen und mit Permanentmagneten (522) versehenen Hohlwelle mit T-förmigen Querschnitt ausgebildeten Rotor (52), der mit der Aufnahme (12) verbunden ist und außen an dem C-förmigen Querschnitt des Stators (51) an dessen freien Schenkeln (513) beidseitig des umlaufenden Spaltes (514) gelagert ist, wobei der Stator (51) mit einer Wicklung (53) zur Erzeugung eines elektromagnetischen Feldes versehen ist, welche zwischen den freien Schenkeln (513) und der diesen gegenüberliegenden geschlossenen Rückwand (511) des C-förmigen Querschnitts des Stators (51) angeordnet ist.

2. Vorrichtung nach Anspruch 1, **dadurch gekennzeichnet, dass** an der der Werkzeugaufnahme (12) zugewandten Seitenwand (512) des C-förmigen Querschnitts des Stators (51) wenigstens eine Nut (510) eingebracht ist, in die ein an der Aufnahme (12) angeformter Führungssteg (14) eingreift.

3. Vorrichtung nach einem der vorgenannten Ansprüche, **dadurch gekennzeichnet, dass** der radial nach außen ragende umlaufende Steg (521) des T-förmigen Querschnitts des Rotors (52) in den umlaufenden Spalt (514) des C-förmigen Querschnitts des Stators (51) eingreift.

4. Vorrichtung nach Anspruch 3, **dadurch gekennzeichnet, dass** der umlaufende Steg (522) des Rotors (52) derart in den Spalt (514) des Stators (51) eingreift, dass dessen Kopffläche mit den Innenflächen der freien Schenkel (513) des C-förmigen Querschnitts des Stators (51) fluchtet.

5. Vorrichtung nach einem der vorgenannten Ansprüche, **dadurch gekennzeichnet, dass** der Rotor (52) an seiner der Werkzeugaufnahme (12) gegenüberliegenden Seite mit einem Flansch (15) verbunden ist, der drehbar mit dem Stator (51) verbunden ist.

6. Vorrichtung nach Anspruch 5, **dadurch gekennzeichnet, dass** zwischen Stator (51), Rotor (52) und Werkzeugaufnahme (12) bzw. Flansch (15) beidseitig des Steges (521) des T-förmigen Querschnitts des Rotors (52) jeweils ein Lagersitz (541) gebildet ist, der das von diesem aufgenommene Lager (41) vollständig umschließt.

7. Vorrichtung nach einem der vorgenannten Ansprüche, **dadurch gekennzeichnet, dass** an dem Stator (51) wenigstens ein Kanal zur Durchleitung von Kühlmittel angeordnet ist.

8. Vorrichtung nach einem der vorgenannten Ansprüche, **dadurch gekennzeichnet, dass** die Aufnahme (12) des Wirbelaggregats (1) Indexierstifte umfasst, die mit in dem Wirbelwerkzeug (4) vorhandenen Indexierbohrungen (42) korrespondieren.

9. Vorrichtung nach einem der vorgenannten Ansprüche, **dadurch gekennzeichnet, dass** das Gehäuse (11) des Wirbelaggregats (1) eine in Art eines Tonnenausschnitts ausgebildete Außenwandung (110) aufweist.
